Europäisches Patentamt

European Patent Office

Office européen des brevets

(19)

(11) **EP 0 808 205 B1**

(12) **EUROPÄISCHE PATENTSCHRIFT**

(45) Veröffentlichungstag und Bekanntmachung des Hinweises auf die Patenterteilung:
**21.10.1998 Patentblatt 1998/43**

(21) Anmeldenummer: **96904756.2**

(22) Anmeldetag: **09.02.1996**

(51) Int. Cl.$^6$: **B01D 29/01**, B01D 29/60, B01D 37/04, B01D 29/68

(86) Internationale Anmeldenummer:
**PCT/EP96/00563**

(87) Internationale Veröffentlichungsnummer:
**WO 96/24424 (15.08.1996 Gazette 1996/37)**

(54) **KOSTENORIENTIERTE STEUERUNG EINES REGENERIERBAREN FILTERS**

COST-ORIENTED CONTROL OF A REGENERABLE FILTER

COMMANDE EN FONCTION DES COUTS D'UN FILTRE REGENERABLE

(84) Benannte Vertragsstaaten:
**DE FR GB**

(30) Priorität: **10.02.1995 DE 19504328**

(43) Veröffentlichungstag der Anmeldung:
**26.11.1997 Patentblatt 1997/48**

(73) Patentinhaber:
**Taprogge Gesellschaft mbH
58300 Wetter (DE)**

(72) Erfinder:
• **EIMER, Klaus
  D-40883 Ratingen (DE)**
• **PATZIG, Dieter
  D-40882 Ratingen (DE)**

• **SCHILDMANN, Hans, W.
  D-42579 Heiligenhaus (DE)**

(74) Vertreter:
**Kahlhöfer, Hermann, Dipl.-Phys. et al
Patent- und Rechtsanwälte
Bardehle, Pagenberg, Dost, Altenburg,
Geissler, Isenbruck
Uerdinger Str. 5
40474 Düsseldorf (DE)**

(56) Entgegenhaltungen:
DE-A- 3 116 610          DE-A- 3 835 672
US-A- 4 482 461          US-A- 4 685 066
US-A- 4 918 426

**Beschreibung**

Die vorliegende Erfindung bezieht sich auf ein Verfahren zur kostenorientierten Steuerung eines regenerierbaren mechanischen Filters, und zwar besonders für Verunreinigungen im Kühlwasserstrom vor Wärmeaustauschern mit:

- einem zwischen Kühlwasserpumpe und Wärmeaustauscher im Verlauf der Kühlwasserzulaufleitung angeordneten Filter mit einem Filtergehäuse, mindestens einem den Gehäusequerschnitt abdeckenden Filterelement, mindestens einer auf das Filterelement einwirkenden und die Verunreinigungen abspülenden Reinigungsvorrichtung und mindestens einer Spülwasserleitung, die mit einer Spülarmatur verschließbar ist und zur Abführung der abgespülten Verunreinigungen dient,
- mindestens einem oder mehreren den Betriebszustand der Anlage überwachenden Sensoren, deren Signalleitungen Signale (S1, S2 ... Sn) abgeben, welche den durch die Verschmutzung des Filters verschlechterten Betriebszustand der aus Kühlwasserpumpe, Filter und Wärmeaustauscher bestehenden Gesamtanlage anzeigen,
- einem Spülbefehlgenerator, der einerseits mit den die Signale (S1, S2 ... Sn) abgebenden Signalleitungen verbunden ist und andererseits an seiner Befehlsleitung den Spülbefehl (Sa) zum Spülen des Filters schaltbar macht
- einer Spülprozeßsteuerung, die an die Befehlsleitung des Spülbefehlgenerators angeschlossen ist und bei einem den Spülbefehl signalisierenden Schaltzustand der Befehlsleitung durch Öffnen der Spülarmatur und durch Betätigung der Reinigungsvorrichtung den Spülprozeß durchführbar macht.

Anlagen dieser Art sind seit langem bekannt. So ist in der Veröffentlichung von A. Lange "Kosteneinsparungen durch verbesserten Betrieb der Kühlrohr-Reinigungsanlage, Einsatz von Kühlwasserfiltern und einer neuartigen Kondensatorüberwachung" in VGB Kraftwerkstechnik 70 (1990) Heft 8, Seite 681 bis 688 eine Anlage der bekannten Art als Kühlwasserfilter beschrieben. Das Filter ist vor dem Wärmeaustauscher, in diesem Fall ein Turbinenkondensator zur Kondensation des eine Turbine verlassenden Dampfes, in die Kühlwasserzulaufleitung eingebaut. Die für den Prozeß notwendige Kühlwasser-pumpe ist stromaufwärts des Filters angeordnet, jedoch nicht dargestellt. Das Filter besitzt ein den Gehäusequerschnitt abdeckendes, Filtereinsatz genanntes Filterelement, eine auf Teilbereiche des Filterelement einwirkende und die Verunreinigungen abspülende Reinigungsvorrichtung, Rotor mit Rotorantrieb genannt, und eine die Wandungen des Gehäuses durchsetzende Spülwasser-leitung, die stromabwärts des Wärmeaustauschers an die Kühlwasser-ablaufleitung angeschlossen und mit einer Abwasserarmatur genannten Spül-armatur verschließbar ist und zur Abführung der abgespülten Verunreinigungen dient.

Die Filteranlage besitzt einen als Differenzdruckmeßsystem bezeichneten den Betriebszustand der Anlage überwachenden Sensor, dessen Signalleitung ein elektrisches Signale abgibt, welches den durch die Verschmutzung des Filters erhöhten Differenzdruck des Filters und damit den verschlechterten Betriebszustand der aus Kühlwasserpumpe, Filter und Wärmeaustauscher bestehenden Gesamtanlage anzeigt.

Ein Spülbefehlgenerator, der einerseits mit der das Signal abgebenden Signalleitung des Sensors verbunden ist und andererseits den Spülbefehl zum Spülen des Filters an eine Spülprozeßsteuerung zum Öffnen der Spülarmatur und Betätigen der Reinigungsvorrichtung weitergibt, ist zusammen mit der Spülprozeßsteuerung in einer als Steuerschrank bezeichneten Einheit zusammengefaßt.

Die Steuerung der Anlage erfolgt dadurch, daß das Differenzdruckmeßsystem den Belegungsgrad des Filtereinsatzes überwacht. Erreicht der vom Differenzdruckmeßsystem gemessene Differenzdruck des Filters einen eingestellten Grenzwert, dann gibt der Spülbefehlgenerator den Spülbefehl an die Spülprozeßsteuerung, welche den Rotorantrieb einschaltet und die Abwasserarmatur öffnet.

Eine weitere Ausführungsform der bekannten Steuerung der beschriebenen Anlagen der bekannten Art ist in der japanischen Schrift JP-A-61-38000 beschrieben. Das dortige Filterelement ist zylinderförmig und besteht z.B. aus Lochblech. Die Reinigungsvorrichtung ist eine unmittelbar vor dem Filtereintritt angeordnete Drosselklappe, die beim Filterspülen eine turbulente Ringströmung hoher Geschwindigkeit erzeugt, wodurch die Schmutzteile vom Filterelement abgehoben und zur Spülwasserleitung transportiert werden. Die Anlage besitzt als den Betriebszustand der Anlage überwachende Sensoren ein Differenzdruck-Meßsystem und ein Kühlwasservolumenstrom-Meßsystem, deren Signalleitungen elektrische Signale abgeben, welche den durch die Verschmutzung des Filters verschlechterten Betriebszustand der aus Kühlwasserpumpe, Filter und Wärmeaustauscher bestehenden Gesamtanlage anzeigen. Der Spülbefehlgenerator besteht aus einem Funktionsspeicher und einem Komparator und ist mit den Signalleitungen des Differenzdruck-Meßsystems und des Kühlwasservolumen-strom-Meßsystems verbunden. Die Spülprozeßsteuerung ist mit der Befehlsleitung des Spülbefehlgenerators verbunden. Das Verfahren zur Steuerung der Anlage besteht darin, daß im Komparator der aktuelle Differenzdruck des Filters mit einem im Funktionsspeicher in Abhängigkeit vom Kühlwasservolumenstrom vorgegebenen Sollwert verglichen und bei Überschreiten des Sollwertes der Spülbefehl zum Spülen des Filters elektrisch an die Spülprozeßsteuerung gegeben wird, die ihrerseits das Filterspülen durch Öffnen der Spülarmatur und Betätigung der Drosselklappe einleitet.

Zum bekannten Stand der Technik gehören auch Anlagen, bei denen die Spülwasserleitung nicht an die Kühlwasserablaufleitung, sondern an einen offenen Abwasserkanal oder einen Abwasserspeicher angeschlossen ist. Das Filterlement kann auf ganz unterschiedliche Art ausgeführt sein, z.B. als sich zweidimensional erstreckendes sogenanntes Oberflächenfilter (z.B. aus gestanztem Lochblech gefertigt und als ebene Fläche oder Zylinder oder Kugelkalotte geformt) oder als sogenanntes Tiefenfilter bestehend z.B. aus gewickeltem Garn oder aus einer Schüttung aus Sand oder Aktivkohle. Die Reinigungsvorrichtung kann wie in der genannten Veröffentlichung von A. Lange ein Rückspülrotor sein, wie in der genannten japanischen Schrift 61-38000 eine Drosselklappe oder auch aus mehreren Absperrklappen bestehen, mit deren Hilfe Teile des Filterelementes nacheinander zuströmseitig vom Kühlwasserstrom abgetrennt und mit der Spülwasserleitung verbunden werden, wodurch für den abgesperrten Teil des Filterelementes eine Rückspülung mit gereinigtem Kühlwasser vom Filteraustritt her durch das Filterlement zur Spülwasserleitung entsteht. Auch kann das Filtergehäuse aus mehreren Einzelgehäusen bestehen, die zum Spülen nacheinander mittels Absperrarmaturen am Filtereintritt von der gemeinsamen Kühlwasserzulaufleitung abgetrennt und über Spülarmaturen mit einer gemeinsamen Spülwasserleitung verbunden werden können. Die vorliegende Erfindung soll sich auf alle genannten und ungenannten an sich bekannten regenerierbaren mechanischen Filter für Flüssigkeiten beziehen und nicht auf Kühlwasseranlagen beschränkt sein.

Davon abgesehen, daß auch bekannt ist, den Spülbefehl manuell über einen Druckknopf oder über eine Zeitschaltuhr zu generieren, haben die bekannten Verfahren zur Steuerung eines regenerierbaren mechanischen Filters gemeinsam, daß der Spülbefehl zum Spülen des Filters dann generiert wird, wenn der von einem Differenzdruck-Meßsystem gemessene Differenzdruck des Filters oder des Filterelementes einen fest vorgegebenen Grenzwert (Spülpunkt genannt) überschreitet oder, in einer verbesserten Ausführungsform, einen in einer festen Abhängigkeit vom aktuellen Kühlwasservolumenstrom vorgegebenen Grenzwert, wobei der Kühlwasservolumenstrom mit verschiedenartigen Sensoren gemessen werden kann.

Durch die Belegung des Filtereinsatzes mit Verunreinigungen aus dem Kühlwasserstrom steigt der Druckabfall des Filtereinsatzes an. Dies bewirkt bei Kühlwasserpumpen mit nicht geregeltem Antrieb einen Abfall des Kühlwasservolumenstroms, der am Wärmeaustauscher eine thermische Minderleistung verursacht. Bei Kühlwasserpumpen mit geregeltem Antrieb oder mit Schaufelverstellung kann dies z.T. durch erhöhte Pumpenleistung kompensiert werden. Insgesamt entsteht durch die Verschmutzung des Filtereinsatzes eine verschlechterte Wirksamkeit der aus Kühlwasserpumpe, Filter und Wärmeaustauscher bestehenden Gesamtanlage, die vom Differenzdruck-Meßsystem und gegebenenfalls vom Kühlwasservolumenstrom-Meßsystem als die den Betriebszustand der Anlage überwachen den Sensoren angezeigt wird und als "Leistungsverlust durch Filterverschmutzung" bezeichnet wird. Das Filter sollte daher bei möglichst geringer Belegung des Filtereinsatzes und daher möglichst häufig gespült werden, um einen möglichst geringen mittleren Leistungsverlust durch Filterverschmutzung zu erzielen.

Andererseits verringert sich beim Spülen des verschmutzten Filters der dem Wärmeaustauscher zugeführte Kühlwasservolumenstrom um den Betrag des Spülwasserstroms. Die entsprechende thermische Wirkung geht dem Wärmeaustauscher verloren. Insgesamt entsteht durch das Filterspülen eine verschlechterte Wirksamkeit der aus Kühlwasserpumpe, Filter und Wärmeaustauscher bestehenden Gesamtanlage, die als "Leistungsverlust durch Filterspülen" bezeichnet wird. Das Filter sollte daher möglichst selten gespült werden, um insgesamt einen geringen Leistungsverlust durch Filterspülen zu erreichen.

Von Nachteil bei den bekannten Verfahren zur Steuerung der beschriebenen Anlagen für die mechanischen Reinigung von Flüssigkeiten ist, daß

- bei einem zum Erreichen eines seltenen Filterspülens hoch eingestelltem Spülpunkt hohe Leistungsverluste durch Filterverschmutzung entstehen,
- andererseits jedoch bei einem zum Erreichen eines geringen Leistungsverlustes durch Filterverschmutzung niedrig eingestellten Spülpunkt häufiges Filterspülen mit entsprechend hohen Leistungsverlusten entstehen kann.

Bei häufigem Filterspülen sind auch die entsprechend hohen Betätigungsenergien und die schnelle Abnutzung der Reinigungsvorrichtung und der Spülwasserarmatur von Nachteil.

Der Nachteil der bekannten Verfahren besteht also grundsätzlich darin, daß der Spülpunkt fest oder in einer festen Abhängigkeit vom Kühlwasservolumenstrom eingestellt ist und dies nicht den zeitlich schwankenden Schmutzanfall, also die zeitlich schwankende Konzentration der Verunreinigungen im Kühlwasserstrom berücksichtigt, und daß dadurch bei niedrigem Schmutzanfall ein unangemessen hoher "Leistungsverlust durch Filterverschmutzung" und bei hohem Schmutzanfall ein unangemessen hoher "Leistungsverlust durch Filterspülen" entsteht. Insgesamt ist von Nachteil, daß die Festlegung des Spülpunktes in der Regel nach technischen Gesichtspunkten, und nicht nach eventuell wechselnden energetischen und damit verknüpften betriebswirtschaftlichen Kriterien erfolgt.

Aufgabe der vorliegenden Erfindung ist daher die Schaffung eines Verfahrens zur kostenorientierten Steuerung eines regenerierbaren mechanischen Filters für Verunreinigungen im Kühlwasserstrom vor Wärmeaustauschern. Insbesondere soll das notwendige Spülen des Filters nicht an einem festen Spülpunkt oder nach einer festen Abhängigkeit des Spülpunktes vom Kühlwasservolumenstrom erfolgen. Vielmehr soll das Filter gespült werden, wenn dies unter Berücksichtigung wechselnder Betriebsbedingungen energetisch und betriebswirtschaftlich sinnvoll ist. Demgemäß soll der Spülpunkt automatisch der wechselnden Konzentration von Verunreinigungen im Kühlwasserstrom angepaßt werden. Auch die Schaffung einer entsprechenden Vorrichtung zur Durchführung des Verfahrens ist Aufgabe der Erfindung.

Zur Lösung dieser Aufgaben dienen ein Verfahren nach Anspruch 1 und eine Vorrichtung nach Anspruch 15. Vorteilhafte Ausgestaltungen sind in den jeweils abhängigen Ansprüchen angegeben.

Ein wesentliches Merkmal der Erfindung ist, daß die Auswirkungen der Filterverschmutzung auf Leistung und Betriebskosten der Gesamtanlage in die Überlegungen zur Festlegung des Spülpunktes einbezogen und gegen den Leistungsverbrauch und gegebenenfalls auch die Betriebskosten des Filterspülens selbst abgewogen werden, so daß insgesamt ein Minimum an Leistungsverlust und Betriebskosten erreicht wird.

Erfindungsgemäß wird mindestens ein Meßwert, aus dem sich der Verschmutzungszustand des Filters ableiten läßt, einem Spülbefehlsgenerator zugeführt und aus dem Meßwert der aktuelle Verschmutzungszustand ermittelt. Bei diesen Meßwerten kann es sich um einen Differenzdruck, um die Durchflußmenge des Kühlwassers, um die Drehzahl oder Schaufelstellung der Kühlwasserpumpe oder andere Meßwerte handeln. Anhand der im Spülbefehlgenerator gespeicherten Daten und/oder funktionalen Abhängigkeiten werden ein erster Leistungsverlust, den das verschmutzte Filter infolge erhöhten Differenzdruckes und dadurch reduzierten Kühlwasservolumenstromes als Summe aus Leistungsänderung der Kühlwasserpumpe und thermischer Minderleistung des Wärmeaustauschers bewirkt, und ein zweiter Leistungsverlustes und andere Betriebskosten, die beim Spülen des verschmutzten Filters entstehen, miteinander verglichen. An der Befehlsleitung wird der Spülbefehl aktiviert für den Zeitpunkt, ab dem das Spülen des Filters insgesamt energie- und kostensparender ist als der Weiterbetrieb ohne Spülen. Es ist ein wesentlicher Bestandteil der Erfindung, daß sich bei erfindungsgemäß kostenorientierter Steuerung des Filters unter Beachtung der durch Filterverschmutzung und Filterspülen bewirkten Leistungsänderung der Kühlwasserpumpe und der thermischen Minderleistung des Wärmeaustauschers überraschenderweise ein in der Regel viel häufigeres Spülen der Filter ergibt als beim Betrieb nach dem Stand der Technik mit festem Spülpunkt. Vergleichsrechnungen haben ergeben, daß dadurch beträchtliche Energie- und Kosteneinsparungen möglich sind.

Anspruch 1 beschreibt die einzelnen Schritte des Verfahrens im Prinzip, und die abhängigen Ansprüche enthalten vorteilhafte Details.

Das erfindungsgemäße Verfahren ist in der Lage, mit ganz verschiedenen Sensoren und Signalen (S1,S2...Sn) zusammenzuwirken, welche den durch die Verschmutzung des Filters verschlechterten Betriebszustand der aus Kühlwasserpumpe, Filter und Wärmeaustauscher bestehenden Gesamtanlage anzeigen. In einer bevorzugten Ausführungsformen der Erfindung werden jedoch der Differenzdruck (DP) des Filters oder in einer anderen bevorzugten Ausführungsform der Differenzdruck (DP) des Filters und der Kühlwasservolumenstrom (V) herangezogen.

Die Leistungsverluste durch Filterverschmutzung und Filterspülen in Abhängigkeit vom Differenzdruck (DP) des Filters und dem Kühlwasservolumenstrom (V) sind von zahlreichen Parametern der Gesamtanlage abhängig, wie z.B. Kennlinie der Kühlwasserpumpe, hydraulische Kennlinie und thermische Daten des Wärmaustauschers, hydraulische Kennlinien des Filters und der Spülwasserleitung etc., die in einem komplexen Zusammenhang zueinander stehen. Die Ermittlung der Abhängigkeiten ist überraschenderweise nicht aufwendig, wenn man folgendem Erfindungsgedanken folgt: Für die einzelne spezifische Gesamtanlage sind danach nur noch sechs konstante Werte (d; e; f; g; h; i) zu ermitteln, welche die erste und zweite Funktion ($\Delta N1 = f (DP; V)$ und $\Delta N2 = f (DP; V)$) mit ausreichender Genauigkeit als gerade Linien festlegen.

In einer weiteren Ausführungsform der Erfindung, bei der der Kühlwasservolumenstrom (V) nicht als elektrisches Signal vorliegt, werden bei betriebsbedingter Änderung von (V) die geänderten Werte über eine Tastatur manuell eingegeben. In einer anderen, bevorzugten Ausführungsform der Erfindung werden Änderungen des Kühlwasservolumenstromes (V) über eine Auswertung der Änderung des Differenzdruckes des sauberen Filters (DPc) jeweils unmittelbar nach Abschluß des Spülprozesses ermittelt. Dabei wird das saubere Filter wie eine Art Meßblende mit konstantem Druckverlustbeiwert betrachtet, aus deren Differenzdruck-Änderung man auf Änderungen des Kühlwasservolumenstromes schließen kann.

Die Ansprüche 15 und folgende beschreiben eine zur Durchführung des erfindungsgemäßen Verfahrens geeignete erfindungsgemäße Vorrichtung.

Die Wirkungsweise des erfindungsgemäßen Verfahrens zur Steuerung einer Anlage für die mechanischen Reinigung von Flüssigkeiten ist in den Fig. 1 bis 4 beschrieben. Dabei zeigen:

Fig. 1    eine bekannte Anlage für die mechanische Reinigung von Flüssigkeiten als Fließschema

Fig. 2    ein Beispiel für den Verlauf der Leistungsverluste DN1 und DN2 als Funktionen des Differenzdruckes DP und des Kühlwasservolumenstromes V

Fig. 3    die Darstellung der Leistungs- und Energieverluste über der Zeit und des minimalen mittleren Leistungsverlustes $\Delta Nm$ (min) als günstigsten Spülzeitpunkt

Fig. 4    schematisch eine Vorrichtung zur Durchführung des erfindungsgemäßen Verfahrens

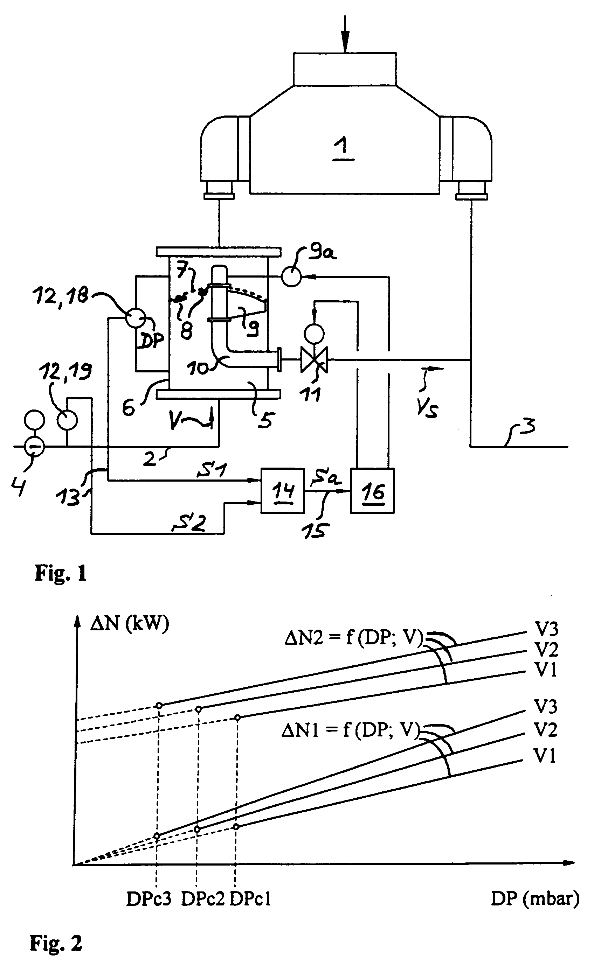

Fig. 1 zeigt eine bekannte Gesamtanlage mit einem regenerierbaren mechanischen Filter für Verunreinigungen im Kühlwasserstrom vor Wärmeaustauschern als Fließschema, mit Wärmeaustauscher (1), Kühlwasserzulaufleitung (2), Kühlwasserablaufleitung (3), Kühlwasserpumpe (4) mit Antriebsmotor und Filter (5). Das Filter (5) besteht aus Filtergehäuse (6), Filterelement (7), Reinigungsvorrichtung (9) mit Antriebswelle und Antriebsmotor (9a), Spülwasserleitung (10) und Spülarmatur (11). Die Anlage ist mit einem Differenzdruck-Meßsystem (18) und einem Kühlwasservolumenstrom-Meßsystem (19) als den Betriebszustand der Anlage überwachenden Sensoren (12) ausgerüstet, deren Signalleitungen (13) elektrische Signale (S1; S2) abgeben und mit dem Spülbefehlgenerator (14) verbunden sind, der andererseits über seine Befehlsleitung (15) mit der Spülprozeßsteuerung (16) verbunden ist und den Spülbefehl (Sa) zum Spülen des Filters (5) elektrisch schaltbar macht. Weiterhin erkennt man die Verunreinigungen (8), die vom Filterelement (7) zurückgehalten werden. Kühlwasservolumenstrom (V) und der Spülwasserstrom (Vs) sind mit Pfeilen dargestellt. Auch ohne besondere Darstellung im Bild ist verständlich, daß durch das Spülen des verschmutzten Filters (5) der Differenzdruck auf den Differenzdruck des sauberen Filters (DPc) abfällt und danach infolge der Konzentration an Verunreinigungen (8) im Kühlwasservolumenstrom (V) wieder ansteigt, bis er nach Ende des Gesamtzeitraums (ΔT1) den festeingestellten Spülpunkt (DPs) erreicht. Für das Spülen wird das Spülintervall (ΔT2) beansprucht. Während des Gesamtzeitraums (ΔT1) steigt der erste Leistungsverlust (ΔN1) infolge steigenden Druckverlustes (DP) des Filters (5) und dadurch reduzierten Kühlwasservolumenstromes (V) als Summe aus Leistungsänderung der Kühlwasserpumpe (4) und thermischer Minderleistung des Wärmeaustauschers (1) an. Während des Spülens im Spülintervall (ΔT2) entsteht ein zweiter Leistungsverlust (ΔN2) infolge Umleitung des Spülwasserstromes (Vs) um den Wärmeaustauscher (1) als Summe aus Leistungsänderung der Kühlwasserpumpe (4) und thermischer Minderleistung des Wärmeaustauschers (1). Unmittelbar nach Abschluß des Spülens liegt bei sauberem Filter (5) der erste Leistungsverlust (ΔN1) wieder bei dem niedrigsten Wert und steigt danach erneut an. Zur Verringerung des erste Leistungsverlustes (ΔN1) infolge steigenden Druckverlustes (DP) des Filters (5) könnte man den Spülpunkt (DPs) auf einen niedrigeren Wert einstellen. Wenn jedoch bei dieser niedrigen Einstellung des Spülpunktes (DPs) eine höhere Konzentration an Verunreinigungen (8) auftritt, so wird der Spülpunkt früher erreicht: das Filter (5) spült öfter. Bei hoher Konzentration an Verunreinigungen (8) würde das Filter (5) dann so oft spülen, daß ein besonders hoher "Leistungsverlust durch Filterspülen" entsteht, der den niedrigeren "Leistungsverlust durch Filterverschmutzung" überkompensiert. Die niedrigere Einstellung des Spülpunktes (DPs) hätte also keine Verbesserung, sondern eine Verschlechterung erbracht. Das bekannte Verfahren zur Steuerung einer Anlage für die mechanischen Reinigung von Flüssigkeiten mit fester Einstellung des Spülpunktes kann die zeitlich schwankende Konzentration der Verunreinigungen im Kühlwasserstrom nicht berücksichtigen und ermöglicht daher nicht eine für alle Betriebsbedingungen günstige Einstellung des Spülpunktes mit niedrigen Energieverlusten. Auch die in Fig. 1 dargestellte Ausrüstung der Anlage mit einem Kühlwasservolumenstrom-Meßsystem (19) ergibt keine Verbesserung der beschriebenen Nachteile. Sie ermöglicht es lediglich, den Spülpunkt an unterschiedliche Werte des Kühlwasservolumenstroms (V) anzupassen. Solche Änderungen des Kühlwasservolumenstroms (V) werden vom Betriebspersonal vorgenommen, um die Anlage auf unterschiedliche Lastzustände und Kühlwassertemperaturen einzustellen. Eine automatische Anpassung des Spülpunktes an unterschiedliche Werte des Kühlwasservolumenstroms (V) ist z.B. deshalb erwünscht, um bei geringem Kühlwasservolumenstrom (V) eine übermäßige Belegung des Filterelementes (7) mit Verunreinigungen (8) zu vermeiden: Bei geringem Kühlwasservolumenstrom (V) würde ein gleich hoher Spülpunkt (DPs) wie bei hohem Kühlwasservolumenstrom (V) erst bei stärkerer Belegung des Siebelementes (7) erreicht.

In Fig. 2 ist für eine bevorzugte Ausführungsform der Erfindung beispielhaft der Verlauf der ersten Funktion (ΔN1 = f (DP; V)) und der zweiten Funktion (ΔN2 = f (DP; V)) über dem Differenzdruck (DP) dargestellt, wobei diese in der bevorzugten Ausführungsform zur Vereinfachung der Ermittlung und Eingabe zur Speicherung im Funktionsspeicher (17) als Geraden (ΔN1 = a * DP und ΔN2 = b * DP + c) mit V als Parameter angegeben sind. Dargestellt sind die ersten und zweiten Funktionen (ΔN1; ΔN2) beispielhaft für drei Werte des Kühlwasservolumenstroms (V1; V2; V3). Als geringstmöglich auftretende Differenzdrücke des sauberen Filters (5) (DPc) sind drei Differenzdruck-Werte (DPc1; DPc2; DPc3) dargestellt. Die Speicherung als Geraden ermöglicht eine Ermittlung mit geringem Aufwand, da eine Gerade durch 2 Punkte bestimmt ist, und zur Ermittlung demgemäß nur 2 Betriebspunkte mit unterschiedlichem Differenzdruck benötigt werden. Eine weitere Vereinfachung ist durch eine weitere bevorzugte Ausführungsform der Erfindung möglich, indem die Konstanten (a; b; c) in eine nicht dargestellte lineare Abhängigkeit zum Kühlwasservolumenstrom (V) gesetzt werden. Insgesamt müssen für die Ermittlung der ersten und zweiten Leistungsverluste (ΔN1; ΔN2) in dieser besonderen Ausführungsform der Erfindung nur sechs konstante Werte (d; e; f; g; h; i) bestimmt werden.

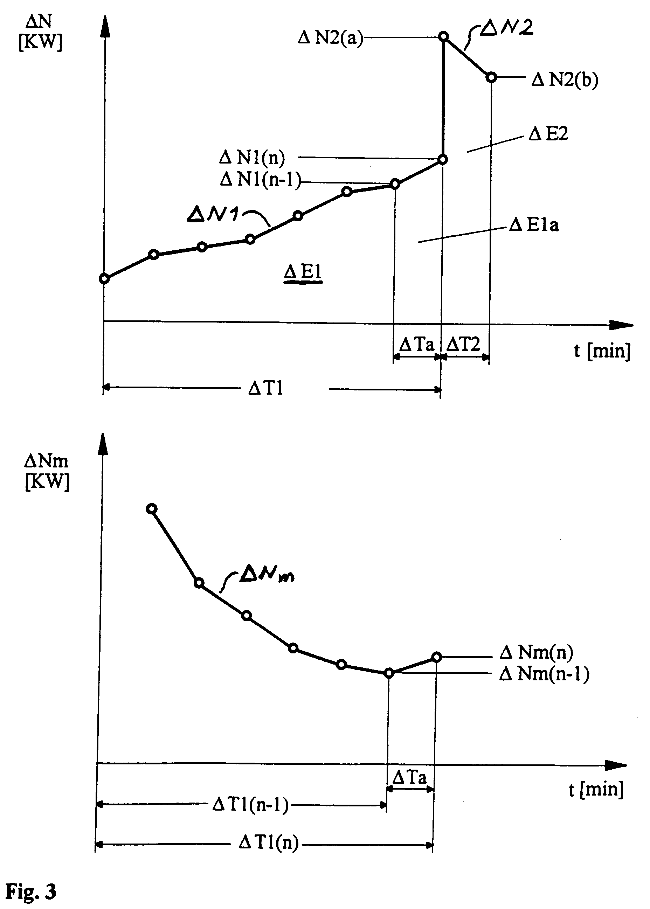

In Fig. 3 sind die weiteren Schritte des erfindungsgemäßen Verfahrens dargestellt. Dabei zeigt der obere Teil der Abbildung den Verlauf der ersten und zweiten Leistungsverluste (ΔN1; ΔN2) über der Zeit (t) und der untere Teil der Abbildung den Verlauf des mittleren Leistungsverlustes (ΔNm) über der Zeit (t). Mittels gespeicherter erster Funktion (ΔN1 = f (S1, S2...Sn)) und jeweils am Ende eines Zeitintervalls (ΔTa) aus einer Reihe aneinandergereihter Zeitintervalle (ΔTa) wird zunächst der augenblickliche erste Leistungsverlust (ΔN1(n)) durch Auswertung der augenblicklichen Meßsignale (S1, S2...Sn) berechnet, danach der im Zeitintervall (ΔTa) durch das verschmutzte Filter entstandene

augenblickliche erste Energieverlust ($\Delta$E1a) nach der Formel $\Delta$E1a = $\Delta$Ta * ($\Delta$N1(n)+$\Delta$N1(n-1)) / 2 als Fläche unter der Kurve des ersten Leistungsverlustes (DN1) über der Zeit (t). Danach wird durch Integration aller im Gesamtzeitraum ($\Delta$T1) seit dem letzten vorhergehenden Spülprozeß in mehreren Zeitintervallen ($\Delta$Ta) insgesamt entstandenen augenblicklichen ersten Energieverluste ($\Delta$E1a) die Energiesumme ($\Delta$E1) gebildet. Danach wird, unter der Annahme, daß das Filter (5) in diesem Augenblick gespült würde, mittels gespeicherter zweiter Funktion ($\Delta$N2 = f (S1, S2...Sn) ) der augenblickliche zweite Leistungsverlust ($\Delta$N2(a)) zu Beginn des Spülintervalls ($\Delta$T2) durch Auswertung der augenblicklichen Meßsignale (S1, S2...Sn) ermittelt und unter der Annahme, daß das Filter (5) am Ende des Spülintervalls ($\Delta$T2) denselben Wert des zweiten Leistungsverlustes ($\Delta$N2) erreichen wird wie zu Beginn des Gesamtzeitraums (DT1), der zugehörige augenblickliche zweite Leistungsverlust ($\Delta$N2(b)) am Ende des Spülintervalls. Der während des Spülprozesses im Spülintervall ($\Delta$T2) enstehende zweite Energieverlust ($\Delta$E2) wird als Fläche mit der Breite des Spülintervalls ($\Delta$T2) unter der Kurve des zweiten Leistungsverlustes ($\Delta$N2) über der Zeit (t) ermittelt unter der Annahme, daß das Filter (5) zu diesem Zeitpunkt gespült würde. Die weiteren Schritte des erfindungsgemäßen Verfahrens zur Steuerung einer Anlage für die mechanischen Reinigung von Flüssigkeiten bestehen darin, in nicht dargestellter Weise die Verlustsumme ($\Sigma\Delta$E) als den gesamten Energieverlust einschließlich der nicht dargestellten Energieaufwendungen (Ex) zu bilden sowie den mittleren Leistungsverlust ($\Delta$Nm) zu berechnen nach der Formel $\Delta$Nm = $\Sigma\Delta$E / ($\Delta$T1 + $\Delta$T2) . Der für den derzeitigen Gesamtzeitraum ($\Delta$T1(n)) ermittelte mittlere Leistungsverlust ($\Delta$Nm(n)) wird mit dem im vorhergehenden Gesamtzeitraum ($\Delta$T1(n-1)) ermittelten mittleren Leistungsverlustes ($\Delta$Nm(n-1)) verglichen und der Spülbefehl (Sa) zum Spülen des Filters (5) dann aktiviert, wenn die Bedingung $\Delta$Nm(n) > $\Delta$Nm(n-1) erfüllt ist. In dargestellten Beispiel wäre der minimal mögliche Wert für den mittleren Leistungsverlust ($\Delta$Nm) gerade erreicht und über die Befehlsleitung (15) der Spülbefehl (Sa) gegeben.

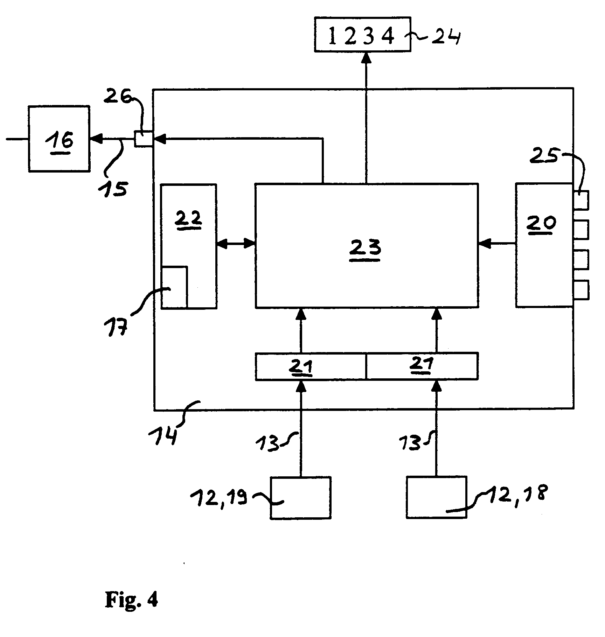

Fig. 4 zeigt eine lediglich ein Ausführungsbeispiel darstellende erfindungsgemäße Vorrichtung zur Durchführung des Verfahrens. Zwei als Differenzdruck-Meßsystem (18) und als Kühlwasservolumenstrom-Meßsystem (19) ausgeführte Sensoren (12) sind über Signalleitungen (13) mit dem Meßwerteingang (21) eines Spülbefehlgenerators (14) verbunden. Die Meßwerte (DP; V) werden über den Meßwerteingang (21) einer Recheneinheit (23) zur Berechnung und zum Vergleich von augenblicklichen ersten und zweiten Leistungsverlusten ($\Delta$N1(n); $\Delta$N1(n-1); $\Delta$N2(a); $\Delta$N2(b)), Energieverlusten ($\Delta$E1a; $\Delta$E2), der Energiesumme ($\Delta$E1), der Verlustsumme ($\Sigma\Delta$E) und des mittleren Leistungsverlustes ($\Delta$Nm), des Gesamtzeitraums ($\Delta$T1) sowie zur Generierung eines Spülbefehls (Sa) über einen Signalausgang (26) an der Befehlsleitung (15) und Ansteuerung eines Anzeigeinstrumentes (24) zugeführt, die mit einem nicht flüchtige Speicher (22) für vorgebbare Werte von Zeitintervallen ($\Delta$Ta), Spülintervallen ($\Delta$T2), Energieaufwendungen (Ex) Geldwertfaktoren (GW), Wartungskosten (W) und/oder funktionale Zusammenhänge von Parametern und insbesondere ein Funktionsspeicher (17) für die Speicherung des ersten und zweiten Leistungsverlustes ($\Delta$N1; $\Delta$N2) als Funktion der Signale (S1, S2 ... Sn) verbunden ist. Eine Eingabeeinheit (20) für Daten besitzt Tasten (25) zur manuellen Eingabe. Das Anzeigeinstrument (24) dient zur Kontrolle der über die Eingabeeinheit (20) eingegebenen Daten und zur Darstellung des Betriebszustandes des Filters, beispielsweise zur Darstellung des augenblicklichen mittleren Leistungsverlustes ($\Delta$Nm).

Bedeutsamer Bestandteil der Erfindung ist, daß das erfindungsgemäße Verfahren den Verlauf des durch die Verschmutzung des Filters (5) verursachten Leistungsverlust ($\Delta$N1) seit der letzten Reinigung des Wärmeaustauschers bis zum derzeitigen Zeitpunkt, also in der Vergangenheit bewertet und daraus auf die Zukunft schließt. Dies geschieht unter der Annahme, daß der mit einer Filterspülung abgeschlossene Betriebszyklus sich im Verschmutzungsverlauf und Verlauf des Kühlwasservolumenstromes über der Zeit ähnlich verhält wie der nächste Betriebszyklus nach abgeschlossener Spülung. Dies ist die bestmögliche Annäherung an die Wirklichkeit und wesentlicher Bestandteil der Erfindung. Wesentlicher Bestandteil der Erfindung ist auch, daß das gesamte Spektrum der schwankenden Betriebsbedingungen durch den erfindungsgemäßen Integrationsvorgang mit anschließender Differenzierung kostenorientiert bewertend in die Überprüfung einbezogen wird, was bei der nach dem bekannten Stand der Technik üblichen Überwachung eines bloßen Augenblickswertes des Differenzdruckes des Filters nicht möglich ist.

Insgesamt wird durch Anwendung des erfindungsgemäßen Verfahrens zur kostenorientierten Steuerung eines regenerierbaren mechanischen Filters für Verunreinigungen im Kühlwasserstrom vor Wärmeaustauschern bei geringer Konzentration von Verunreinigungen im Kühlwasserstrom ein niedriger Spülpunkt und bei hoher Konzentration ein hoher Spülpunkt und damit eine dem Schmutzanfall entsprechende Spülweise mit insgesamt niedrigst möglichen Energieverlusten einerseits infolge der Filterverschmutzung und andererseits infolge des Filterspülens ermöglicht. Die beschriebene Vorrichtung ermöglicht die Durchführung des Verfahrens.

Das Verfahren ist nicht auf die Anwendung zur Reinigung von Verunreinigungen im Kühlwasserstrom und nicht auf die beschriebenen Ausführungsformen der Filter beschränkt. Es ist vielmehr für alle Fluide und alle Filter anwendbar, bei denen die angesammelten Verunreinigung einen Anstieg des Differenzdruckes erzeugen und während des Spülprozesses ein Spülfluidstrom dem nachgeschalteten Apparat und damit dem Gesamtprozeß verloren geht.

EP 0 808 205 B1

Bezugszeichenliste:

1 Wärmetauscher
2 Kühlwasserzulaufleitung
3 Kühlwasserablaufleitung
4 Kühlwasserpumpe
5 Filter
6 Filtergehäuse
7 Filterelement
8 Verunreinigungen
9 Reinigungsvorrichtung
10 Spülwasserleitung
11 Spülarmatur
12 Sensoren
13 Signalleitungen
14 Spülbefehlgenerator
15 Befehlsleitung
16 Spülprozeßsteuerung
17 Funktionsspeicher
18 Meßsystem
19 Kühlwasservolumen-Meßsystem
20 Eingabeeinheit
21 Meßwerteingang
22 nicht flüchtige Speicher
23 Recheneinheit
24 Anzeigeinstrument
25 Tasten
26 Signalausgang

**Patentansprüche**

1. Verfahren zur Steuerung eines mittels einer Spülvorrichtung regenerierbaren mechanischen Filters (5) in einem von einer Kühlwasserpumpe (4) angetriebenen Kühlwasserstrom eines Wärmeaustauschers (1) mit folgenden Schritten:

a. es wird mindestens ein Meßwert erfaßt, aus dem sich der aktuelle Verschmutzungsgrad des Filters (5) ableiten läßt, und einem Spülbefehlsgenerator (14) zugeführt;
b. anhand von in dem Spülbefehlsgenerator (14) gespeicherten Daten und/oder funktionalen Zusammenhängen werden in vorgebbaren Zeitabständen jeweils ein erster ($\Delta$N1) und ein zweiter ($\Delta$N2) Leistungsverlust berechnet, wobei

- der erste Leistungsverlust ($\Delta$N1) den durch den Verschmutzungsgrad des Filters (5) hervorgerufenen Leistungsverlust in der Kühlwasserpumpe (4) und im Wärmeaustauscher (1) beinhaltet und
- der zweite Leistungsverlust ($\Delta$N2) den durch einen Spülvorgang beim aktuellen Verschmutzungsgrad verursachten Leistungsverlust beinhaltet;

c. aus dem zeitlichen Verlauf des ersten errechneten Leistungsverlustes (DN1) werden jeweils die insgesamt durch die Verschmutzung des Filters verursachten Gesamtenergieverluste ($\Delta$E1) seit der letzten Regenerierung ermittelt;
d. es wird jeweils ein aktueller zweiter Energieverlust ($\Delta$E2) für einen Reinigungsvorgang berechnet, der den zweiten Leistungsverlust multipliziert mit der Regenerationsdauer ($\Delta$T2) enthält;
e. zu dem jeweils aktuell aufgelaufenen Gesamtenergieverlust ($\Delta$E1) wird der aktuell berechnete zweite Energieverlust ($\Delta$E2) hinzugerechnet und die Summe durch die seit der letzten Regenerierung verstrichene Zeit ($\Delta$T1) einschließlich der für einen Regenerationsvorgang benötigten Zeit ($\Delta$T2) geteilt;
f. der zeitliche Verlauf dieses Quotienten ($[\Delta$E1+$\Delta$E2$]/[\Delta$T1+$\Delta$T2$]$) wird überwacht und ein Regenerationsvorgang ausgelöst, wenn der Quotient ein Minimum durchlaufen hat und wieder ansteigt.

2. Verfahren nach Anspruch 1, dadurch gekennzeichnet, daß zu der Summe der Gesamtenergieverluste ($\Delta$E1+$\Delta$E2)

7

ein den Betriebs- und Wartungskosten pro Spülvorgang entsprechender Energieverlust (Ex) hinzugerechnet wird.

3. Verfahren nach Anspruch 1 oder 2, dadurch gekennzeichnet, daß mindestens ein Differenzdruck, vorzugsweise über dem Filter (5), und/oder ein Kühlwasservolumenstrom als Meßwert ermittelt wird.

4. Verfahren nach Anspruch 1, 2 oder 3, dadurch gekennzeichnet, daß ein im Spülbefehlsgenerator (14) gespeicherter fünktionaler Zusammenhang einen unterschiedlichen Verschmutzungszustand des Filters (5) und einen Kühlwasservolumenstrom bei sauberem Filter berücksichtigt sowie mindestens einen Meßwert zur Bestimmung eines der Leistungsverluste verarbeitet.

5. Verfahren nach Anspruch 4, dadurch gekennzeichnet, daß der funktionale Zusammenhang als annähernd linear eingespeichert wird, insbesondere in Abhängigkeit von der Druckdifferenz und/oder dem Kühlwasservolumenstrom.

6. Verfahren nach einem der Ansprüche 4 oder 5, dadurch gekennzeichnet, daß der funktionale Zusammenhang verändert wird, insbesondere bei Änderungen des Kühlwasservolumenstromes.

7. Verfahren nach einem der vorhergehenden Ansprüche, dadurch gekennzeichnet, daß nach einem Spülvorgang der Kühlwasservolumenstrom ermittelt wird, vorzugsweise aus mindestens einem aktuellen und einem gespeicherten Meßwert.

8. Verfahren nach einem der vorhergehenden Ansprüche, wobei das Filter (5) zwischen Kühlwasserpumpe (4) und Wärmeaustauscher (1) im Verlauf der Kühlwasserzulaufleitung (2) zum Wärmetauscher (1) angeordnet ist, weiter mit

- einem Filtergehäuse (6), mindestens einem den Gehäusequerschnitt abdeckenden Filterelement (7), mindestens einer auf das Filterelement (7) einwirkenden und die Verunreinigungen (8) abspülenden Reinigungsvorrichtung (9) und mindestens einer Spülwasserleitung (10), die mit einer Spülarmatur (11) verschließbar ist und zur Abführung der abgespülten Verunreinigungen (8) dient,
- mindestens einem oder mehreren den Betriebszustand der Anlage überwachenden Sensoren (12), deren Signalleitungen (13) Signale (S1, S2 ... Sn) abgeben, welche den durch die Verschmutzung des Filters (5) verschlechterten Betriebszustand der aus Kühlwasserpumpe (4), Filter (5) und Wärmeaustauscher (1) bestehenden Gesamtanlage anzeigen,
- einem Spülbefehlgenerator (14), der einerseits mit den die Signale (S1, S2 ... Sn) abgebenden Signalleitungen (13) verbunden ist und andererseits an seiner Befehlsleitung (15) den Spülbefehl (Sa) zum Spülen des Filters (5) schaltbar macht,
- einer Spülprozeßsteuerung, (16), die an die Befehlsleitung (15) des Spülbefehlgenerators (14) angeschlossen ist und bei einem den Spülbefehl signalisierenden Schaltzustand der Befehlsleitung (15) durch Öffnen der Spülarmatur (11) und durch Betätigung der Reinigungsvorrichtung (9) den Spülprozeß durchführbar macht,

wobei folgende Schritte durchgeführt werden:

a. Ermittlung des ersten Leistungsverlustes ($\Delta$N1), den das verschmutzte Filter (5) infolge erhöhten Differenzdruckes (DP) und dadurch reduzierten Kühlwasservolumenstromes (V) als Summe aus Leistungsänderung der Kühlwasserpumpe (4) und thermischer Minderleistung des Wärmeaustauschers (1) bewirkt, in Abhängigkeit von den Signalen (S1, S2...Sn) als Variablen, bei mehreren unterschiedlichen Verschmutzungsstadien des Filters (5) und bei mindestens einem Betriebswert des Kühlwasservolumenstromes (V) als Parameter und Speicherung des ersten Leistungsverlustes ($\Delta$N1) als erste Funktion ($\Delta$N1 = f (S1, S2 ... Sn) ) der Signale (S1, S2...Sn) in einem Funktionsspeicher (17);
b. Ermittlung des zweiten Leistungsverlustes ($\Delta$N2), der beim Spülen des verschmutzten Filters (5) hauptsächlich dadurch entsteht, daß der Spülwasserstrom (Vs) dem Wärmeaustauscher (1) verloren geht, als Summe aus Leistungsänderung der Kühlwasserpumpe (4) und thermischer Minderleistung des Wärmeaustauschers (1), in Abhängigkeit von den Signalen (S1, S2...Sn) als Variablen, bei mehreren unterschiedlichen Verschmutzungsstadien und bei mindestes einem Betriebswert des Kühlwasservolumenstromes (V) als Parameter und Speicherung des zweiten Leistungsverlustes ($\Delta$N2) als zweite Funktion ($\Delta$N2 = f (S1, S2 ... Sn) ) der Signale (S1, S2...Sn) in einem Funktionsspeicher (17);
c. mittels gespeicherter erster Funktion ($\Delta$N1 = f (S1, S2 ... Sn) ) der Signale (S1, S2...Sn) und für das letzte Zeitintervall ($\Delta$Ta) aus einer Reihe aneinandergereihter Zeitintervalle ($\Delta$Ta) Ermittlung des augenblicklichen

ersten Leistungsverlustes ($\Delta$N1(n)) durch Auswertung der augenblicklichen Meßsignale (S1, S2...Sn) und Berechnung des im letzten Zeitintervall ($\Delta$Ta) durch das verschmutzte Filter (5) entstandenen augenblicklichen ersten Energieverlustes ($\Delta$E1a) nach der Formel $\Delta$E1a = $\Delta$Ta $*$ ($\Delta$N1(n)+$\Delta$N1(n-1)) / 2 , wobei der augenblickliche erste Leistungsverlust $\Delta$N1(n-1) zu Beginn und der augenblickliche erste Leistungsverlust $\Delta$N1(n) am Ende des letzten Zeitintervalls (DTa) gilt, und Integration aller im Gesamtzeitraum ($\Delta$T1) seit dem letzten vorhergehenden Spülprozeß in mehreren Zeitintervallen ($\Delta$Ta) insgesamt entstandenen augenblicklichen ersten Energieverluste ($\Delta$E1a) als Energiesumme ($\Delta$E1);

d. mittels gespeicherter zweiter Funktion ($\Delta$N2 = f (S1, S2 ... Sn) ) der Signale (S1, S2...Sn) Ermittlung der augenblicklichen zweiten Leistungsverluste ($\Delta$N2(a); $\Delta$N2(b)) durch Auswertung der augenblicklichen Meßsignale (S1, S2...Sn) und Berechnung des während des Spülprozesses im Spülintervall (DT2) durch augenblickliches Spülen des verschmutzten Filters (5) enstehenden zweiten Energieverlustes ($\Delta$E2) nach der Formel $\Delta$E2 = $\Delta$T2 $*$ ($\Delta$N2(a)+$\Delta$N2(b))/2 unter der Annahme, daß das Filter (5) zu diesem Zeitpunkt gespült würde;

e. Bildung der Verlustsumme ($\Sigma\Delta$E ) nach der Formel $\Sigma\Delta$E = $\Delta$E1 + $\Delta$E2 + Ex als der gesamte Energieverlust für den Fall, daß das Filter (5) zu diesem Zeitpunkt gespült würde, wobei Ex die Summe der Energieaufwendungen für die Betätigung von Spülarmatur (11) und Reinigungsvorrichtung (9) sowie die mit einem Geldwertfaktor (GW) als Energieverlust ausgedrückten Wartungskosten (W) für das Filter (5) ausdrückt, die durch einen Spülzyklus entstehen;

f. Berechnung des mittleren Leistungsverlustes ($\Delta$Nm) nach der Formel $\Delta$Nm = $\Sigma\Delta$E / ($\Delta$T1 + $\Delta$T2) für den Zeitraum aus der Summe des Gesamtzeitraumes ($\Delta$T1) und des Spülintervalls ($\Delta$T2);

g. Vergleich des für den derzeitigen Gesamtzeitraum ($\Delta$T1(n)) ermittelten mittleren Leistungsverlustes ($\Delta$Nm(n)) mit dem im vorhergehenden Gesamtzeitraum ($\Delta$T1(n-1)) ermittelten mittleren Leistungsverlustes ($\Delta$Nm(n-1)) und Aktivierung des Spülbefehls an der Befehlsleitung (15) zum Spülen des Filters (5) dann, wenn die Bedingung $\Delta$Nm(n) > $\Delta$Nm(n-1) erfüllt ist, andernfalls ohne augenblickliches Spülen erneute Überprüfung der Bedingung $\Delta$Nm(n) > $\Delta$Nm(n-1) für den nachfolgenden Gesamtzeitraum ($\Delta$T1(n+1)).

9. Verfahren nach Anspruch 8, dadurch gekennzeichnet, daß

a. als Signal (S1), welches den durch die Verschmutzung des Filters (5) verschlechterten Betriebszustand der aus Kühlwasserpumpe (4), Filter (5) und Wärmeaustauscher (1) bestehenden Gesamtanlage anzeigt, der über ein Differenzdruck-Meßsystem (18) ermittelte Differenzdruck (DP) des Filters (5) herangezogen wird,

b. der erste Leistungsverlust ($\Delta$N1) und der zweite Leistungsverlust ($\Delta$N2) in Abhängigkeit von dem Differenzdruck (DP) des Filters (5) als Variablen, bei mehreren unterschiedlichen Verschmutzungsstadien und bei mindestes einem Betriebswert des Kühlwasservolumenstromes (V) als Parameter ermittelt und als erste und zweite Funktionen ($\Delta$N1 = f (DP, V) ; $\Delta$N2 = f (DP, V) ) mit V als Parameter in dem Funktionsspeicher (17) gespeichert werden, wobei die Werte des Parameters V den Kühlwasservolumenstrom bei sauberem Filter (5) kennzeichnen,

c. und die augenblicklichen ersten Leistungsverluste ($\Delta$N1(n); $\Delta$N1(n-1)) und augenblicklichen zweiten Leistungsverluste ($\Delta$N2(a); $\Delta$N2(b)) mittels der gespeicherten ersten und zweiten Funktion ($\Delta$N1 = f (DP; V) ; $\Delta$N2 = f (DP; V) ) mit dem augenblicklichen Differenzdruck (DPa) berechnet werden.

10. Verfahren nach einem der Ansprüche 8 oder 9, dadurch gekennzeichnet, daß

a. als Signale (S1; S2), welche den durch die Verschmutzung des Filters (5) verschlechterten Betriebszustand der aus Kühlwasserpumpe (4), Filter (5) und Wärmeaustauscher (1) bestehenden Gesamtanlage anzeigen, der über ein Differenzdruck-Meßsystem (18) ermittelte Differenzdruck (DP) des Filters (5) und der über ein Kühlwasservolumenstrom-Meßsystem (19) ermittelte Kühlwasservolumenstrom (V) herangezogen werden;

b. der erste Leistungsverlust ($\Delta$N1) und der zweite Leistungsverlust ($\Delta$N2) in Abhängigkeit von dem Differenzdruck (DP) des Filters (5) und dem Kühlwasservolumenstrom (V) als Variablen, bei mehreren unterschiedlichen Verschmutzungsstadien und bei mindestes einem Betriebswert des Kühlwasservolumenstromes (V) als Parameter ermittelt und als erste und zweite Funktionen ($\Delta$N1 = f (DP, V) ; $\Delta$N2 = f (DP, V) ) in dem Funktionsspeicher (17) gespeichert werden;

c. und die augenblicklichen ersten Leistungsverluste ($\Delta$N1(n); $\Delta$N1(n-1)) und augenblicklichen zweiten Leistungsverluste ($\Delta$N2(a); $\Delta$N2(b) mittels der gespeicherten ersten und zweiten Funktion ($\Delta$N1 = f (DP; V) ; $\Delta$N2 = f (DP; V) ) mit dem augenblicklichen Differenzdruck (DPa) und dem augenblicklichen Kühlwasservolumenstrom (Va) berechnet werden.

11. Verfahren nach einem der Ansprüche 8 bis 10, dadurch gekennzeichnet, daß die erste und zweite Funktion ($\Delta$N1 = f (DP, V) ; $\Delta$N2 = f (DP, V) ) annähernd als Geraden der Form $\Delta$N1 = a $*$ DP und $\Delta$N2 = b $*$ DP + c

gespeichert sind, wobei die Konstanten a, b und c in eine lineare Abhängigkeit zum Kühlwasservolumenstrom (V) zu setzen sind, welche die Form a = d - e * V und b = f - g * V und c = h - i * V haben, wobei d, e, f, g, h und i konstante Werte sind.

12. Verfahren nach einem der vorhergehendenden Ansprüche, dadurch gekennzeichnet, daß eine Änderung des Kühlwasservolumenstromes (V) für das saubere Filter über eine Eingabeeinheit (20) eingegeben wird.

13. Verfahren nach einem der vorhergehenden Ansprüche, dadurch gekennzeichnet, daß Änderungen des Kühlwasservolumenstromes (V) über eine Auswertung der Änderung des Differenzdnuckes des sauberen Filters (DPc) jeweils unmittelbar nach Abschluß des Spülprozesses ermittelt werden, nach der Beziehung

$$V \text{ aktuell} / V \text{ referenz} = (DPc \text{ aktuell} / DPc \text{ referenz})^{0,5}$$

wobei der Index "referenz" einen Referenzzustand mit bekannten Betriebswerten für den Differenzdruck des sauberen Filters (DPc) und den Kühlwasservolumenstrom (V) beschreibt und der Index "aktuell" einen aktuellen Zustand mit gemessenem Differenzdruckes des sauberen Filters (DPc) und unbekanntem Kühlwasservolumenstromes (V).

14. Verfahren nach einem der vorhergehenden Ansprüche, dadurch gekennzeichnet, daß das Verfahren im Rahmen einer Regelung eingesetzt wird.

15. Vorrichtung zur Steuerung eines mittels einer Spülvorrichtung regenerierbaren mechanischen Filters (5) im von einer Kühlwasserpumpe (4) angetriebenen Kühlwasserstrom eines Wärmeaustauschers (1), wobei diese die folgenden Komponenten enthält:

- einen Spülbefehlgenerator (14) mit einer Eingabeeinheit (20) und nicht flüchtigen Speichern (22) für vorgebbare Werte und/oder funktionale Zusammenhänge von Parametern,
- mindestens einen Sensor (12; 18; 19) zur Aufnahme von Meßwerten, aus denen in vorgebbaren Zeitabständen jeweils ein erster Leistungsverlust (DN1), den die Verschmutzung des Filters als Leistungsänderung der Kühlwasserpumpe (4) und als Leistungsänderung des Wärmeaustauschers (1) verursacht, errechnet werden kann,
- Mittel (23) zur Berechnung des sich aus dem zeitlichen Verlauf der errechneten ersten Leistungsverluste ($\Delta N1$) ergebenden Gesamtenergieverlustes (DE1) seit der letzten Regenerierung des Filters (5),
- Mittel (23) zur Berechnung des aktuell zu erwartenden Energieverlustes (DE2), den ein Regenerationsvorgang als Leistungsänderung der Kühlwasserpumpe (4) und als Leistungsänderung des Wärmeaustauschers (1) verursachen würde, gegebenenfalls einschließlich der in Energieverlust (Ex) umgerechneten Betriebskosten des Filters (5),
- Mittel (23) zur Erkennung, wann die aktuelle Summe des Gesamtenergieverlustes ($\Delta E1$) und des bei einer Regeneration zu erwartenden Energieverlustes (DE2) dividiert durch die Zeit seit der letzten Regeneration einschließlich der zu erwartenden Regenerationszeit ($\Delta T1 + \Delta T2$) ein Minimum erreicht bzw. überschritten hat, und zur daraufhin erfolgenden Auslösung eines Regenerationsvorganges.

16. Vorrichtung nach Anspruch 15, dadurch gekennzeichnet, daß mindestens ein Mittel (12; 18; 19) zur Meßwertaufnahme eines Druckes und/oder eines Volumenstromes vorhanden ist.

17. Vorrichtung nach Anspruch 15 oder 16, dadurch gekennzeichnet, daß als Werte und/oder Parameter Zeitintervalle, Spülintervalle, Energieaufwendungen, Geldwertfaktoren, Wartungskosten und/oder Energiekosten eingebbar sind.

18. Vorrichtung nach Anspruch 17, dadurch gekennzeichnet, daß die Eingabeeinheit über eine Tastatur zur Eingabe von mindestens einem der Werte und/oder Parameter verfügt.

19. Vorrichtung nach einem der Ansprüche 15 bis 18, wobei diese mindestens aufweist:

- einen Sensor (12; 18; 19) zur Erzeugung von Meßwerten (S1, S2... Sn), aus denen im Spülbefehlgenerator (14) die augenblicklichen ersten und zweiten Leistungsverluste ($\Delta N1(n)$; $\Delta N1(n-1)$; $\Delta N2(a)$; $\Delta N2(b)$) ermittelbar sind,
- einem Spülbefehlgenerator (14) mit einer Eingabeeinheit (20) für Daten und zumindest einem Meßwerteingang (21), wobei

- in dem Spülbefehlgenerator (14) nicht flüchtige Speicher (22) für vorgebbare Werte von Zeitintervallen ($\Delta$Ta), Spülintervallen ($\Delta$T2), Energieaufwendungen (Ex), Geldwertfaktoren (GW), Wartungskosten (W) und/oder funktionale Zusammenhänge von Parametern und insbesondere ein Funktionsspeicher (17) für die Speicherung des ersten und zweiten Leistungsverlustes ($\Delta$N1; $\Delta$N2) als Funktion der Signale (S1, S2 ... Sn) vorhanden sind, und
- der Spülbefehlgenerator (14) eine Recheneinheit (23) besitzt zur Berechnung und zum Vergleich von augenblicklichen ersten und zweiten Leistungsverlusten ($\Delta$N1(n); $\Delta$N1(n-1); $\Delta$N2(a); $\Delta$N2(b)), Energieverlusten ($\Delta$E1a; $\Delta$E2), der Energiesumme ($\Delta$E1), der Verlustsumme (SDE) und des mittleren Leistungsverlustes ($\Delta$Nm), des Gesamtzeitraums ($\Delta$T1) sowie zur Generierung eines Spülbefehls (Sa) an der Befehlsleitung (15) und Ansteuerung eines Anzeigeinstrumentes (24),
- eine Befehlsleitung (15) zur Übergabe des Spülbefehls (Sa) an die Spülprozeßsteuerung (16),
- ein Anzeigeinstrument (24) zur Anzeige des Betriebsstatus der Vorrichtung zur kostenorientierten Steuerung eines regenerierbaren mechanischen Filters und zur Überprüfung der eingegebenen Daten sowie zur Anzeige des augenblicklichen mittleren Leistungsverlustes ($\Delta$Nm) und anderer Rechenwerte,
- eine Spülprozeßsteuerung (16).

20. Vorrichtung nach einem der Ansprüche 15 bis 19, dadurch gekennzeichnet, daß:

- ein den augenblicklichen Differenzdruck (DPa) des Filterelementes (7) messendes Differenzdruck-Meßsystem (18) als Sensor (12) vorhanden ist,
- der Funktionsspeicher (17) insbesondere für die Speicherung der ersten und zweiten Funktionen ($\Delta$N1 = f (DP, V) ; $\Delta$N2 = f (DP, V) ) vorgesehen ist.

21. Vorrichtung nach einem der Ansprüche 15 bis 20, dadurch gekennzeichnet, daß:

- ein den augenblicklichen Differenzdruck (DPa) des Filterelementes (7) messendes Differenzdruck-Meßsystem (18) und ein den augenblicklichen Kühlwasservolumenstrom (Va) messendes Kühlwasservolumenstrom-Meßsystem (19) als Sensoren (12) vorhanden sind,
- der Funktionsspeicher (17) insbesondere für die Speicherung der ersten und zweiten Funktionen ($\Delta$N1 = f (DP, V); $\Delta$N2 = f (DP, V) ) vorgesehen ist.

## Claims

1. Method for controlling a mechanical filter (5) which is regenerable by means of a flushing device and which is in a cooling water flow, driven by a cooling water pump (4), of a heat exchanger (1), with the following steps:

   a. at least one measured value is sensed, from which the current degree of fouling of the filter (5) can be deduced, and is supplied to a flush command generator (14);
   b. by means of data and/or functional correlations stored in the flush command generator (14), in predetermined time intervals respectively a first ($\Delta$N1) and a second ($\Delta$N2) power loss is calculated, wherein

   - the first power loss ($\Delta$N1) comprises the power loss in the cooling water pump (4) and in the heat exchanger (1) caused by the degree of fouling of the filter (5), and
   - the second power loss ($\Delta$N2) comprises the power loss caused by a flushing procedure with the current degree of fouling;

   c. from the development over time of the first calculated power loss (DN1) respectively the total energy losses ($\Delta$E1) caused as a whole by the fouling of the filter since the last regeneration are determined;
   d. a current second energy loss ($\Delta$E2) is respectively calculated for a cleansing procedure which comprises the second power loss multiplied by the duration of the regeneration ($\Delta$T2);
   e. the current calculated second energy loss ($\Delta$E2) is added to the respective current total energy loss ($\Delta$E1) accumulated, and the sum is divided by the time elapsed ($\Delta$T1) since the last regeneration inclusive of the time ($\Delta$T2) needed for a regeneration procedure;
   f. the development over time of these quotients ($[\Delta E1 + \Delta E2] / [\Delta T1 + \Delta T2]$) is monitored and a regeneration procedure triggered when the quotient has passed through a minimum and is increasing again.

2. Method according to claim 1, characterised in that an energy loss (Ex) corresponding to the operating and servicing costs per flushing procedure is added to the sum of the total energy losses ($\Delta$E1+$\Delta$E2).

3. Method according to claim 1 or 2, characterised in that at least one pressure differential, preferably over the filter (5), and/or a cooling water volume flow is determined as the measured value, .

4. Method according to claim 1, 2 or 3, characterised in that the functional correlation stored in a flush command generator (14) takes into account a different degree of fouling of the filter (5) and a cooling water volume flow when the filter is clean, as well as at least one measured value for determining one of the power losses.

5. Method according to claim 4, characterised in that the functional correlation is stored as an approximate straight line, in particular in dependency upon the pressure differential and/or the cooling water volume flow.

6. Method according to one of claims 4 or 5, characterised in that the functional correlation is changed, in particular when there are changes in the cooling water volume flow.

7. Method according to one of the preceding claims, characterised in that after a flushing procedure the cooling water volume flow is determined, preferably from at least one current and one stored measured value.

8. Method according to one of the preceding claims, wherein the filter (5) is arranged between the cooling water pump (4) and heat exchanger (1) in the path of the cooling water supply line (2) to the heat exchanger (1), furthermore with

- a filter housing (6) at least one filter element (7) covering the cross-section of the housing, at least one cleansing device (9) acting upon the filter element and flushing away the contaminants (8) and at least one flush water line (10) which can be connected to a flushing means (11) and is for removing the flushed out contaminants (8),
- at least one or more sensors (12) monitoring the operating condition of the installation, the signal lines (13) of which output signals (S1, S2...Sn), which indicate the deteriorated operating condition of the whole installation, composed of a cooling water pump (4), filter (5) and heat exchanger (1) caused by the fouling of the filter (5),
- a flush command generator (14) which is on the one hand connected to the signal lines (13) outputting the signals (S1, S2...Sn) and on the other hand to its command line (15), which makes the flush command (Sa) for flushing the filter (5) switchable,
- a flush process control (16) which is connected to the command line (15) of the flush command generator (14) and when there is a switch state signalling the flush command, the flush command (15) makes the flushing process practicable by opening the flushing means (11) and by actuating the cleansing device (9),

wherein the following steps are carried out:

a. determination of a first power loss ($\Delta N1$) caused by the fouled filter (5) as a result of increased pressure differential (DP) and reduced cooling water volume flow (V) as the sum of the change in output of the cooling water pump (4) and reduced thermal output of the heat exchanger (1), dependent upon signals (S1, S2...Sn) as variables, at different stages of fouling of the filter (5) and with at least one operating value of the cooling water volume flow (V) as a parameter, and storage of the first power loss ($\Delta N1$) as the first function ($\Delta N1 = f (S1, S2...Sn)$) of the signals (S1, S2...Sn) in a function memory (17);

b. determination of the second power loss ($\Delta N2$) which occurs during flushing of the fouled filter (5) mainly because the flushing water flow (Vs) is lost from the heat exchanger (1), as the sum of the change in output of the cooling water pump (4) and reduced thermal output of the heat exchanger (1), dependent upon the signals (S1, S2...Sn) as variables, at several different stages of fouling of the filter (5), and with at least one operating value of the cooling water volume flow (V) as a parameter, and storage of the second power loss ($\Delta N2$) as the second function ($\Delta N2 = f (S1, S2...Sn)$) of the signals (S1, S2...Sn) in a function memory (17);

c. determination, by means of the stored first function ($\Delta N1 = f (S1, S2...Sn)$) of the signals (S1, S2...Sn) and for the last time interval ($\Delta Ta$), from a series of combined time intervals ($\Delta Ta$), of the current first power loss ($\Delta N1 (n)$) by evaluation of the current measured signal (S1, S2...Sn) and calculation of the first energy loss ($\Delta E1a$) caused in the last time interval ($\Delta Ta$) by the fouled filter (5) according to the formula $\Delta E1a = \Delta Ta * (\Delta N1(n) + \Delta N1(n-1)) / 2$, wherein the current first power loss $\Delta N1(n-1)$ applies at the beginning and the current first power loss $\Delta N1(n)$ at the end of the last time interval (DTa), and integration of all the current first energy losses ($\Delta E1a$) which have occurred in the total time period ($\Delta T1$) since the last, previous flushing process in several time intervals ($\Delta Ta$) as the sum energy ($\Delta E1$);

d. determination, by means of the stored second function ($\Delta N2 = f (S1, S2...Sn)$) of the signals (S1, S2...Sn), of the current second power losses ($\Delta N2(a); \Delta N2(b)$) by evaluation of the current measured signal (S1, S2...Sn) and calculation of the second energy loss ($\Delta E2$) caused during the flushing process in the flushing interval (DT2) by current flushing of the fouled filter (5) according to the formula $\Delta E2 = \Delta T2^*(\Delta N2(a) + \Delta N2(b))/2$, with the assumption that the filter (5) would be flushed at this time;

e. formation of the sum loss ($\Sigma\Delta E$) according to the formula $\Sigma\Delta E = \Delta E1 + \Delta E2 + Ex$ as the total energy loss for when the filter (5) is flushed at this time, wherein Ex expresses the sum of the energy expenditure for actuating the flushing means (11) and cleansing device (9) and the servicing costs (W) for the filter (5) which occur due to a flushing cycle, expressed by a monetary value (GW) as the energy loss;

f. calculation of the average power loss ($\Delta Nm$) according to the formula $\Delta Nm = \Sigma\Delta E / (\Delta T1 + \Delta T2)$ for the period from the sum of the total period of time ($\Delta T1$) and the flushing interval ($\Delta T2$);

g. comparison of the average power loss ($\Delta Nm(n)$) determined for the total period at that time ($\Delta T1(n)$) with the average power loss ($\Delta Nm(n-1)$) determined in the previous time period ($\Delta T1(n-1)$) and activation of the flush command on the command line (15) for flushing the filter (5) when the condition $\Delta Nm(n) > \Delta Nm(n-1)$ is satisfied, otherwise, without current flushing, new examination of the condition $\Delta Nm(n) > \Delta Nm(n-1)$ for the subsequent total time period ($\Delta T1(n+1)$).

**9.** Method according to claim 8, characterised in that

a. the pressure differential (DP) of the filter (5) determined by means of a pressure differential measuring system (18) is used as the signal (S1) which indicates the operating condition of the whole installation composed of a cooling water pump (4), filter (5) and heat exchanger (1) impaired by the fouling of the filter,

b. the first power loss ($\Delta N1$) and the second power loss ($\Delta N2$) are determined dependent on the pressure differential (DP) of the filter (5) as variables, at several different stages of fouling and with at least one operating value of the cooling water volume flow (V) as a parameter and are stored in the function memory (17) as first and second functions ($\Delta N1 = f(DP, V)$ ; $\Delta N2 = f(DP, V)$) with V as a parameter, wherein the values of the parameter V characterise the cooling water volume stream when there is a clean filter (5),

c. and the current first power losses ($\Delta N1(n)$; $\Delta N1(n-1)$) and current second power losses ($\Delta N2(a)$; $\Delta N2(b)$) are calculated with the current pressure differential (DPa) by means of the stored first and second function ($\Delta N1 = f(DP; V)$ ; $\Delta N2 = f(DP; V)$).

**10.** Method according to one of claims 8 or 9, characterised in that

a. the pressure differential (DP) of the filter (5) determined by means of a pressure differential measuring system (18) and the cooling water volume flow (V) determined by means of a cooling water volume flow measuring system (19) are used as the signals (S1; S2) which indicate the operating condition of the whole installation composed of a cooling water pump (4), filter (5) and heat exchanger (1) impaired by the fouling of the filter;

b. the first power loss ($\Delta N1$) and the second power loss ($\Delta N2$) are determined dependent on the pressure differential (DP) of the filter and the cooling water volume flow (V) (5) as variables, at several different stages of fouling and with at least one operating value of the cooling water volume flow (V) as a parameter and are stored in the function memory (17) as first and second functions ($\Delta N1 = f(DP, V)$ ; $\Delta N2 = f(DP, V)$);

c. and the current first power losses ($\Delta N1(n)$; $\Delta N1(n-1)$) and current second power losses ($\Delta N2(a)$; $\Delta N2(b)$) are calculated with the current pressure differential (DPa) and the current cooling water volume flow (Va) by means of the stored first and second function ($\Delta N1 = f(DP; V)$ ; $\Delta N2 = f(DP; V)$).

**11.** Method according to one of claims 8 to 10, characterised in that the first and second functions ($\Delta N1 = f(DP; V)$ ; $\Delta N2 = f(DP; V)$) are stored as approximately straight lines having the form $\Delta N1 = a * DP$ and $\Delta N2 = b * DP + c$, wherein the constants a, b and c have to be placed in a linear dependency with respect to the cooling water volume flow (V), having the form $a = d - e * V$ and $b = f - g * V$ and $c = h - i * V$, wherein d, e, f, g, h and i are constant values.

**12.** Method according to one of the preceding claims, characterised in that a change to the cooling water volume flow (V) for the clean filter is input by means of an input unit (20).

**13.** Method according to one of the preceding claims, characterised in that changes to the cooling water volume flow (V) are determined by evaluation of the change in pressure differential of the clean filter (DPc) in each case directly after completion of the flushing process, according to the relation

$$\text{current V / reference V} = (\text{current DPc / reference DPc}) \wedge 0.5$$

wherein the term "reference" describes a reference state with known operating values for the pressure differential of the clean filter (DPc) and the cooling water volume flow (V), and the term "current" describes a current condition with measured pressure differential of the clean filter DPc) and unknown cooling water volume flow (V).

**14.** Method according to one of the preceding claims, characterised in that the method is used within the framework of control.

**15.** Device for controlling a mechanical filter (5) which is regenerable by means of a flushing device and which is in a cooling water flow driven by a cooling water pump (4) of a heat exchanger (1), wherein said device comprises the following components:

- a flush command generator (14) with an input unit (20) and non-volatile memories (22) for predetermined values and/or functional correlations of parameters,
- at least one sensor (12; 18; 19) for receiving measured values from which, at predetermined intervals, respectively a first power loss (DN1) which is caused by the fouling of the filter can be calculated as a change in output of the cooling water pump (4) and as a change in output of the heat exchanger (1),
- means (23) for calculating of the total energy loss (DE1) calculated from the development over time of the first power losses ($\Delta N1$) since the last regeneration of the filter (5),
- means (23) for calculating the current energy loss (DE2) to be expected to be caused by a regeneration procedure as a change in output in the cooling water pump (4) and as a change in output of the heat exchanger (1), possibly inclusive of the operating costs of the filter (5) converted into the energy losses (Ex),
- means (23) for recognising when the current sum of the total energy loss ($\Delta E1$) and of the energy loss (DE2) expected with a regeneration divided by the time since the last regeneration inclusive of the regeneration time ($\Delta T1 + \Delta T2$) to be expected has reached a minimum or has exceeded it, and for triggering a regeneration process resulting from this.

**16.** Device according to claim 15, characterised in that at least one means (12; 18; 19) for receiving measured values of a pressure and/or of a volume flow is provided.

**17.** Device according to claim 15 or 16, characterised in that time intervals, flush intervals, energy expenditure, monetary value factors, servicing costs and/or energy costs can be input as values and or parameters.

**18.** Device according to claim 17, characterised in that the input unit is provided with a keyboard for inputting at least one of the value and/or parameter.

**19.** Device according to one of claims 15 to 18, wherein it is provided with at least:

- a sensor (12; 18; 19) for producing measured values (S$\Delta$, S2...Sn) from which the current first and second power losses ($\Delta N1(n);\Delta N1(n-1);\Delta N2(a);\Delta N2(b)$) can be determined in the flush command generator (14),
- a flush command generator (14) with an input unit (20) for data and at least one measured value input (21), wherein
- in the flush command generator (14) there are provided non volatile memories (22) for pre-determined values of time intervals ($\Delta Ta$), flush intervals ($\Delta T2$), energy expenditure (Ex), monetary values (GW), servicing costs (W) and/or functional correlations of parameters and in particular a function memory (17) for the storage of the first and second power losses ($\Delta N1; \Delta N2$) as functions of the signals (S1, S2...Sn), and
- the flush command generator (14) has a calculator unit (23) for calculating and for comparison of current first and second power losses ($\Delta N1(n);\Delta N1(n-1);\Delta N2(a);\Delta N2(b)$), of the energy losses ($\Delta E1a; \Delta E2$), of the sum energy ($\Delta E1$), of the sum loss (SDE) and of the average power loss ($\Delta Nm$) of the total time period ($\Delta T1$) and for generating a flush command (Sa) on the command line (15) and control of a display means (24),
- a command line (15) for transmitting the flush command (Sa) to the flush process control (16),
- a display means (24) to display the operational status of the device for cost-orientated control of a regenerable mechanical filter and for examining the data input and for display of the current average power loss ($\Delta Nm$) and other calculated values,
- a flush process control (16).

**20.** Device according to one of claims 15 to 19, characterised in that:

- a pressure differential measuring system (18) measuring the current pressure differential (DPa) of the filter element (7) is provided as the sensor (12),

- the function memory (17) is provided in particular for storage of the first and second functions ($\Delta N1 = f (DP, V)$ ; $\Delta N2 = f(DP, V)$ ).

**21.** Device according to one of claims 15 to 20, characterised in that:

- a pressure differential measuring system (18) measuring the current pressure differential (DPa) of the filter element (7) and a cooling water volume flow measuring system (19) measuring the current cooing water volume flow (Va) are provided as the sensors (12),
- the function memory (17) is provided in particular for storage of the first and second functions ($\Delta N1 = f(DP, V)$ ; $\Delta N2 = f(DP, V)$ ).

## Revendications

**1.** Procédé destiné à la commande d'un filtre mécanique (5) pouvant être régénéré au moyen d'un dispositif de lavage, lequel est disposé dans un courant d'eau de refroidissement entraîné par une pompe (4) d'eau de refroidissement d'un échangeur de chaleur (1), comportant les phases suivantes :

a. il est détecté au moins une valeur de mesure à partir de laquelle peut être déduit le degré d'encrassement réel du filtre (5), qui est transmise à un générateur (14) d'instruction de lavage ;
b. à l'aide des données mémorisées dans le générateur (14) d'instruction de lavage et/ou de relations fonctionnelles, il est calculé dans des intervalles de temps pouvant être prédéterminés une première perte de puissance ($\Delta N1$), et une deuxième perte de puissance ($\Delta N2$);

- la première perte de puissance ($\Delta N1$) indiquant la perte de puissance dans la pompe (4) d'eau de refroidissement et dans l'échangeur de chaleur (1) provoquée par le degré d'encrassement du filtre (5) ; et
- la deuxième perte de puissance ($\Delta N2$) indiquant la perte de puissance lors du degré d'encrassement réel provoquée par un processus de lavage ;

c. détermination, à partir du déroulement dans le temps de la première perte de puissance (DN1) calculée, de la totalité des pertes d'énergie ($\Delta E1$) provoquée par l'encrassement du filtre depuis la dernière régénération ;
d. calcul d'une deuxième perte d'énergie réelle ($\Delta E2$) pour un processus de nettoyage, qui indique la deuxième perte de puissance multipliée par la durée de régénération ($\Delta T2$) ;
e. ajout à la totalité des pertes d'énergie ($\Delta E1$) cumulées réelles de la deuxième perte d'énergie réelle ($\Delta E2$) calculée, et division de la somme par le temps ($\Delta T1$) qui s'est écoulé depuis la dernière régénération, y compris par le temps ($\Delta T2$) nécessaire pour un processus de régénération ;
f. surveillance du déroulement dans le temps de ce quotient ($[\Delta E1 + \Delta E2] / [\Delta T1 + \Delta T2]$), et déclenchement d'un processus de régénération lorsque le quotient est passé par un minimum et remonte à nouveau.

**2.** Procédé selon la revendication 1, caractérisé en ce qu'une perte d'énergie (Ex) correspondant aux coûts de fonctionnement et d'entretien par processus de lavage est ajoutée à la somme de la totalité des pertes d'énergie ($\Delta E1 + \Delta E2$).

**3.** Procédé selon la revendication 1 ou 2, caractérisé en ce qu'il est déterminé en tant que valeur de mesure au moins une pression différentielle, de préférence de part et d'autre du filtre (5), et/ou un débit volumique d'eau de refroidissement.

**4.** Procédé selon la revendication 1, 2 ou 3, caractérisé en ce qu'une relation fonctionnelle mémorisée dans le générateur (14) d'instruction de lavage tient compte d'un état d'encrassement différent du filtre (5), et d'un débit volumique d'eau de refroidissement lorsque le filtre est propre, et traite au moins une valeur de mesure pour déterminer l'une des pertes de puissance.

**5.** Procédé selon la revendication 4, caractérisé en ce que la relation fonctionnelle est mémorisée en tant que valeur approximativement linéaire, notamment en fonction de la différence de pression et/ou du débit volumique d'eau de refroidissement.

**6.** Procédé selon l'une des revendications 4 ou 5, caractérisé en ce que la relation fonctionnelle est modifiée, notamment lors de variations du débit volumique d'eau de refroidissement.

7. Procédé selon l'une quelconque des revendications précédentes, caractérisé en ce que le débit volumique d'eau de refroidissement est déterminé après un processus de lavage, de préférence à partir d'au moins une valeur de mesure réelle et d'une valeur de mesure mémorisée.

8. Procédé selon l'une quelconque des revendications précédentes, étant précisé que le filtre (5) est disposé entre la pompe (4) d'eau de refroidissement et l'échangeur de chaleur (1) dans la conduite d'alimentation (2) d'eau de refroidissement de l'échangeur de chaleur (1), et comporte en outre

- un corps (6) de filtre, au moins un élément filtrant (7) recouvrant la section transversale du corps, au moins un dispositif de nettoyage (9) agissant sur l'élément filtrant (7) et éliminant les impuretés (8), et au moins une conduite (10) d'eau de lavage qui peut être fermée par une vanne de lavage (11), et qui sert à l'évacuation des impuretés (8) éliminées,
- au moins un ou plusieurs détecteurs (12) surveillant l'état de fonctionnement de l'installation, dont les lignes de signalisation (13) délivrent des signaux (S1, S2 ... Sn) qui indiquent l'altération due à l'encrassement du filtre (5) de l'état de fonctionnement de l'ensemble de l'installation constituée d'une pompe (4) d'eau de refroidissement, d'un filtre (5), et d'un échangeur de chaleur (1),
- un générateur (14) d'instruction de lavage, qui est d'une part relié aux lignes de signalisation (13) délivrant les signaux (S1, S2 ... Sn), et sur la ligne d'instruction (15) duquel peut d'autre part être commutée l'instruction de lavage (Sa) du filtre (5),
- une commande (16) de processus de lavage qui est raccordée à la ligne d'instruction (15) du générateur (14) d'instruction de lavage, et qui, lors d'un état de commutation de la ligne d'instruction (15) signalisant l'instruction de lavage, permet l'exécution du processus de lavage par l'ouverture de la vanne de lavage (11) et par l'actionnement du dispositif de nettoyage (9)

étant précisé que les phases suivantes sont effectuées :

a. détermination de la première perte de puissance ($\Delta N1$) que le filtre (5) encrassé provoque en raison de l'augmentation de la pression différentielle (DP) et de la réduction du débit volumique (V) d'eau de refroidissement en résultant, en tant que somme de la variation de puissance de la pompe (4) d'eau de refroidissement et de la puissance thermique réduite de l'échangeur de chaleur (1), et en fonction des signaux (S1, S2 ... Sn) en tant que variables, dans le cas de plusieurs stades différents d'encrassement du filtre (5) et d'au moins une valeur de fonctionnement du débit volumique (V) d'eau de refroidissement en tant que paramètre, et mémorisation dans une mémoire fonctionnelle (17) de la première perte de puissance ($\Delta N1$) en tant que première fonction ($\Delta N1 = f$ (S1, S2 ... Sn) ) des signaux (S1, S2 ... Sn) ;

b. détermination de la deuxième perte de puissance ($\Delta N2$) qui, lors du lavage du filtre (5) encrassé, est essentiellement due au fait que le débit (Vs) d'eau de lavage est perdu pour l'échangeur de chaleur (1), en tant que somme de la variation de puissance de la pompe (4) d'eau de refroidissement et de la puissance thermique réduite de l'échangeur de chaleur (1), et en fonction des signaux (S1, S2 ... Sn) en tant que variables, dans le cas de plusieurs stades différents d'encrassement et d'au moins une valeur de fonctionnement du débit volumique (V) d'eau de refroidissement en tant que paramètre, et mémorisation dans une mémoire fonctionnelle (17) de la deuxième perte de puissance ($\Delta N2$) en tant que deuxième fonction ($\Delta N2 = f$ (S1, S2 ... Sn) ) des signaux (S1, S2 ... Sn) ;

c. détermination de la première perte instantanée de puissance ($\Delta N1(n)$) au moyen de la première fonction ($\Delta N1 = f$ (S1, S2 ... Sn) ) mémorisée des signaux (S1, S2 ... Sn), et pour le dernier intervalle de temps ($\Delta Ta$), à partir d'une série d'intervalles de temps ($\Delta Ta$) ajoutés les uns aux autres, par l'évaluation des signaux de mesure instantanés (S1, S2 ... Sn), et calcul de la première perte instantanée d'énergie ($\Delta E1a$) engendrée pendant le dernier intervalle de temps ($\Delta Ta$) par le filtre (5) encrassé selon la formule $\Delta E1a = \Delta Ta * (\Delta N1(n) + \Delta N1(n\text{-}1)) / 2$, la première perte instantanée de puissance $\Delta N1(n\text{-}1)$ au début du dernier intervalle de temps (DTa), et la première perte instantanée de puissance $\Delta N1(n)$ à la fin de cet intervalle de temps étant retenues, et intégration en tant que somme d'énergie ($\Delta E1$) de l'ensemble des premières pertes instantanées d'énergie ($\Delta E1a$) engendrées depuis le dernier processus de lavage précédent en plusieurs intervalles de temps ($\Delta Ta$) pendant la durée totale ($\Delta T1$) ;

d. détermination de la deuxième perte instantanée de puissance ($\Delta N2(a)$ ; $\Delta N2(b)$) au moyen de la deuxième fonction ($\Delta N2 = f$ (S1, S2 ... Sn) ) mémorisée des signaux (S1, S2 ... Sn), par évaluation des signaux de mesure instantanés (S1, S2 ... Sn), et calcul de la deuxième perte d'énergie ($\Delta E2$) engendrée au cours du processus de lavage pendant l'intervalle de lavage (DT2) par un lavage instantané du filtre (5) encrassé selon la formule $\Delta E2 = \Delta T2 * (\Delta N2(a) + \Delta N2(b)) / 2$, en prenant pour hypothèse que le filtre (5) serait lavé à ce moment ;

e. formation de la somme des pertes ($\Sigma\Delta E$) selon la formule $\Sigma\Delta E = \Delta E1 + \Delta E2 + Ex$ en tant qu'ensemble de la perte d'énergie, pour le cas où le filtre (5) serait lavé à ce moment, Ex étant la somme des coûts énergétiques nécessaires à l'actionnement de la vanne de lavage (11) et du dispositif de nettoyage (9), ainsi que les coûts d'entretien (W) du filtre (5) exprimés avec un coefficient de valeur monétaire (GW) en tant que perte d'énergie, qui sont engendrés par un cycle de lavage ;

f. calcul de la perte de puissance moyenne ($\Delta Nm$) selon la formule $\Delta Nm = \Sigma\Delta E / (\Delta T1 + \Delta T2)$ pour la durée provenant de la somme de la durée totale ($\Delta T1$) et de l'intervalle de lavage ($\Delta T2$) ;

g. comparaison de la perte de puissance moyenne ($\Delta Nm(n)$) déterminée pour cette durée totale ($\Delta T1(n)$) avec la perte de puissance moyenne ($\Delta Nm(n-1)$) déterminée pendant la durée totale précédente ($\Delta T1(n-1)$), et activation de l'instruction de lavage au niveau de la ligne d'instruction (15) pour 1e lavage du filtre (5) lorsqu'il est satisfait à la condition $\Delta Nm(n) > \Delta Nm(n-1)$, sinon, sans lavage instantané, nouvelle vérification de la condition $\Delta Nm(n) > \Delta Nm(n-1)$ pour la durée totale suivante ($\Delta T1(n+1)$).

**9.** Procédé selon la revendication 8, caractérisé en ce que

a. la pression différentielle (DP) du filtre (5), qui est déterminée par l'intermédiaire d'un système de mesure (18) de pression di£férentielle, est utilisée en tant que signal (S1) indiquant l'altération due à l'encrassement du filtre (5) de l'état de fonctionnement de l'ensemble de l'installation constituée d'une pompe (4) d'eau de refroidissement, d'un filtre (5) et d'un échangeur de chaleur (1),

b. la première perte de puissance ($\Delta N1$), et la deuxième perte de puissance ($\Delta N2$), sont déterminées en tant que variables en fonction de la pression différentielle (DP) du filtre (5), dans le cas de plusieurs stades différents d'encrassemertt et d'au moins une valeur de fonctionnement du débit volumique (V) d'eau de refroidissement en tant que paramètre, et sont mémorisées dans la mémoire fonctionnelle (17) en tant que première et deuxième fonctions ($\Delta N1 = f(DP, V)$ ; $\Delta N2 = f(DP, V)$), avec V en tant que paramètre, les valeurs du paramètre V caractérisant le débit volumique d'eau de refroidissement lorsque le filtre (5) est propre, et

c. en ce que les premières pertes instantanées de puissance ($\Delta N1(n)$ ; $\Delta N1(n-1)$), et les deuxième pertes instantanées de puissance ($\Delta N2(a)$ ; $\Delta N2(b)$), sont calculées avec la pression différentielle instantanée (DPa) au moyen des première et deuxième fonctions ($\Delta N1 = f(DP ; V)$ ; $\Delta N2 = f(DP ; V)$) mémorisées.

**10.** Procédé selon l'une des revendications 8 ou 9, caractérisé en ce que

a. la pression différentielle (DP) du filtre (5), qui est déterminée par l'intermédiaire d'un système de mesure (18) de pression différentielle, et le débit volumique (V) d'eau de refroidissement, qui est déterminé par l'intermédiaire d'un système de mesure (19) de débit volumique d'eau de refroidissement, sont utilisés en tant que signaux (S1 ; S2) indiquant l'altération due à l'encrassement du filtre (5) de l'état de fonctionnement de l'ensemble de l'installation constituée d'une pompe (4) d'eau de refroidissement, d'un filtre (5) et d'un échangeur de chaleur (1) ;

b. la première perte de puissance ($\Delta N1$), et la deuxième perte de puissance ($\Delta N2$), sont déterminées en tant que variables en fonction de la pression différentielle (DP) du filtre (5) et du débit volumique (V) d'eau de refroidissement, dans 1e cas de plusieurs stades différents d'encrassement et d'au moins une valeur de fonctionnement du débit volumique (V) d'eau de refroidissement en tant que paramètre, et sont mémorisées dans la mémoire fonctionnelle (17) en tant que première et deuxième fonctions ($\Delta N1 = f(DP, V)$ ; $\Delta N2 = f(DP, V)$) ; et

c. en ce que les premières pertes instantanées de puissance ($\Delta N1(n)$ ; ($\Delta N1(n-1)$), et les deuxièmes pertes instantanées de puissance ($\Delta N2(a)$ ; $\Delta N2(b)$), sont calculées avec la pression différentielle instantanée (DPa) et le débit volumique instantané (Va) d'eau de refroidissement au moyen des première et deuxième fonctions ($\Delta N1 = f(DP ; V)$ ; $\Delta N2 = f(DP ; V)$) mémorisées.

**11.** Procédé selon l'une quelconque des revendications 8 à 10, caractérisé en ce que les première et deuxième fonctions ($\Delta N1 = f(DP, V)$ ; $\Delta N2 = f(DP, V)$) sont mémorisées approximativement en tant que droites ayant la forme $\Delta N1 = a * DP$ et $\Delta N2 = b * DP + c$, les constantes a, b et c ayant la forme $a = d - e * V$, $b = f - g * V$, et $c = h - i * V$, étant à mettre dans une dépendance linéaire par rapport au débit volumique (V) d'eau de refroidissement, d, e, f, g, h et i étant des valeurs constantes.

**12.** Procédé selon l'une quelconque des revendications précédentes, caractérisé en ce qu'une variation du débit volumique (V) d'eau de refroidissement pour le filtre propre est entrée par l'intermédiaire d'une unité d'entrée (20).

**13.** Procédé selon l'une quelconque des revendications précédentes, caractérisé en ce que des variations du débit volumique (V) d'eau de refroidissement sont respectivement déterminées immédiatement à la fin du processus de lavage par une évaluation de la variation de la pression différentielle du filtre propre (DPc), selon l'équation

$$V \text{ réel} / V \text{ référence} = (DPc \text{ réelle} / DPc \text{ référence}) \char`\^ 0,5$$

l'indice "référence" décrivant un état de référence avec des valeurs de fonctionnement connues pour la pression différentielle du filtre propre (DPc) et le débit volumique (V) d'eau de refroidissement, et l'indice "réel" un état réel avec une pression différentielle mesurée du filtre propre (DPc) et un débit volumique (V) inconnu d'eau de refroidissement.

14. Procédé selon l'une quelconque des revendications précédentes, caractérisé en ce que le procédé est mis en oeuvre dans le cadre d'une régulation.

15. Dispositif destiné à la commande d'un filtre mécanique (5) pouvant être régénéré au moyen d'un dispositif de lavage, lequel est disposé dans un courant d'eau de refroidissement entraîné par une pompe (4) d'eau de refroidissement d'un échangeur de chaleur (1), celui-ci comportant les composants suivants :

   - un générateur (14) d'instruction de lavage comportant une unité d'entrée (20), et des mémoires (22) non volatiles destinées à des valeurs pouvant être prédéterminées et/ou à des relations fonctionnelles de paramètres,
   - au moins un détecteur (12 ; 18 ; 19) destiné à enregistrer des valeurs de mesure à l'aide desquelles une première perte de puissance (DN1), qui est provoquée par l'encrassement du filtre en tant que variation de puissance de la pompe (4) d'eau de refroidissement et en tant que variation de puissance de l'échangeur de chaleur (1), peut être calculée dans des intervalles de temps pouvant être prédéterminés,
   - des moyens (23) destinés au calcul de la perte d'énergie totale (DE1) résultant du déroulement dans le temps de la première perte de puissance ($\Delta$N1) calculée depuis la dernière régénération du filtre (5),
   - des moyens (23) destinés au calcul de la perte d'énergie réelle (DE2) à laquelle il y a lieu de s'attendre, qui serait provoquée par un processus de régénération en tant que variation de puissance de la pompe (4) d'eau de refroidissement, et en tant que variation de puissance de l'échangeur de chaleur (1), incluant le cas échéant les coûts d'exploitation du filtre (5) convertis en perte d'énergie (Ex),
   - des moyens (23) destinés à détecter à quel moment la somme réelle de l'ensemble des pertes d'énergie ($\Delta$E1), et la perte d'énergie (DE2) à laquelle il y a lieu de s'attendre lors d'une régénération, divisée par le temps qui s'est écoulé depuis la dernière régénération et incluant le temps de régénération ($\Delta$T1 + $\Delta$T2) attendu, atteint un minimum ou est dépassée, et à déclencher ensuite un processus de régénération.

16. Dispositif selon la revendication 15, caractérisé en ce qu'il est prévu au moins un moyen (12 ; 18 ; 19) pour l'enregistrement des valeurs de mesure d'une pression et/ou d'un débit volumique.

17. Dispositif selon la revendication 15 ou 16, caractérisé en ce que, en tant que valeurs et/ou de paramètres, il est possible d'entrer des intervalles de temps, des intervalles de lavage, des dépenses énergétiques, des coefficients de valeurs monétaires, des coûts d'entretien, et/ou des coûts énergétiques.

18. Dispositif selon la revendication 17, caractérisé en ce que l'unité d'entrée dispose d'un clavier pour entrer au moins l'une des valeurs et/ou paramètres.

19. Dispositif selon l'une quelconque des revendications 15 à 18, celui-ci comportant au moins :

   - un détecteur (12 ; 18 ; 19) destiné à générer des valeurs de mesure (S1, S2 ... Sn) à partir desquelles les première et deuxième pertes instantanées de puissance ($\Delta$N1(n) ; $\Delta$N1(n-1) ; $\Delta$N2(a) ; $\Delta$N2(b)) peuvent être déterminées dans le générateur (14) d'instruction de lavage,
   - un générateur (14) d$^1$instruction de lavage comportant une unité d'entrée (20) pour des données, et au moins une entrée (21) de valeurs de mesure,
   - des mémoires (22) non volatiles étant prévues dans le générateur (14) d'instruction de lavage, qui sont destinées à des valeurs pouvant être prédéterminées d'intervalles de temps ($\Delta$Ta), d'intervalles de lavage ($\Delta$T2), de couts énergétiques (Ex), de coefficients de valeurs monétaires (GW), de coûts d'entretien (W), et/ou de relations fonctionnelles de paramètres, et notamment une mémoire fonctionnelle (17) destinée à la mémorisation des première et deuxième pertes de puissance ($\Delta$N1 ; $\Delta$N2) en tant que fonction des signaux (S1, S2 ... Sn), et
   - en ce que le générateur (14) d'instruction de lavage comporte une unité de calcul (23) destinée au calcul et à la comparaison de première et deuxième pertes instantanées de puissance ($\Delta$N1(n) ; $\Delta$N1(n-1) ; $\Delta$N2(a) ;

ΔN2(b)), de pertes d'énergie (ΔE1a ; ΔE2), de la somme d'énergie (ΔE1), de la somme des pertes (SDE), et de la perte de puissance moyenne (ΔNm), de la durée totale (ΔT1), ainsi qu'à la génération d'une instruction de lavage (Sa) au niveau de la ligne d'instruction (15) et à la commande d'un indicateur (24),

- une ligne d'instruction (15) destinée à la transmission de l'instruction de lavage (Sa) à la commande (16) de processus de lavage,
- un indicateur (24) destiné à l'affichage du statut de fonctionnement du dispositif afin de commander un filtre mécanique régénérable de façon orientée en coût, et à la vérification des données entrées, ainsi qu'à l'affichage de la perte de puissance moyenne instantanée (ΔNm) et d'autres valeurs de calcul,
- une commande (16) de processus de lavage.

20. Dispositif selon l'une quelconque des revendications 15 à 19, caractérisé en ce que :

- un système de mesure (18) de pression différentielle mesurant la pression différentielle instantanée (DPa) de l'élément filtrant (7) est prévu en tant que détecteur (12),
- la mémoire fonctionnelle (17) est notamment prévue pour la mémorisation des première et deuxième fonctions (ΔN1 = f (DP, V) ; ΔN2 = f (DP, V) ).

21. Dispositif selon l'une quelconque des revendications 15 à 20, caractérisé en ce que :

- un système de mesure (18) de pression différentielle mesurant la pression différentielle instantanée (DPa) de l'élément filtrant (7), et un système de mesure (19) de débit volumique d'eau de refroidissement mesurant le débit volumique instantané (Va) d'eau de refroidissement, sont prévus en tant que détecteurs (12),
- la mémoire fonctionnelle (17) est notamment prévue pour la mémorisation des première et deuxième fonctions (ΔN1 = f (DP, V) ; ΔN2 = f (DP, V) ).

**Fig. 1**

**Fig. 2**

Fig. 3

**Fig. 4**